Europäisches Patentamt

European Patent Office

Office européen des brevets

(11) Numéro de publication: **0 236 204**
**A1**

## (12) DEMANDE DE BREVET EUROPEEN

(21) Numéro de dépôt: **87400336.1**

(22) Date de dépôt: **16.02.87**

(51) Int. Cl.⁴: **F 16 F 9/46**

(30) Priorité: **18.02.86 FR 8602188**

(43) Date de publication de la demande:
**09.09.87 Bulletin 87/37**

(84) Etats contractants désignés:
**BE DE ES FR GB IT NL SE**

(71) Demandeur: **Bourcier de Carbon, Christian**
**64 Boulevard Maurice Barrès**
**F-92200 Neuilly-sur-Seine (FR)**

(72) Inventeur: **Bourcier de Carbon, Christian**
**64 Boulevard Maurice Barrès**
**F-92200 Neuilly-sur-Seine (FR)**

(74) Mandataire: **Casalonga, Axel et al**
**BUREAU D.A. CASALONGA - JOSSE Morassistrasse 8**
**D-8000 Munich 5 (DE)**

(54) Amortisseur hydraulique a amortissement controle.

(57) Amortisseur hydraulique télescopique à amortissement contrôlé comportant un cylindre (1) à l'intérieur duquel peut se déplacer un piston (6) fixé à l'extrémité d'une tige (7), le piston présentant au moins un passage restreint (12) coopérant avec un clapet élastique (13), un passage supplémentaire (16,17) pouvant être plus ou moins fermé par un moyen d'obturation (18) commandé à distance pour autoriser le passage du fluide hydraulique d'un côté à l'autre du piston lors du déplacement de celui-ci à l'intérieur du cylindre, caractérisé par le fait que le déplacement du moyen d'obturation (18) est commandé par l'intermédiaire d'un organe d'actionnement (21) comprenant un élément actif réalisé en un matériau métallique à mémoire capable de changer de dimension à une température de transformation déterminée.

FIG.1

Bundesdruckerei Berlin

**Description**

Amortisseur hydraulique télescopique à amortissement contrôlé.

Les amortisseurs, utilisés en particulier dans la suspension des véhicules automobiles et dans les applications similaires, présentent des caractéristiques d'amortissement qui sont un compromis entre les différents buts recherchés, en particulier le confort, la stabilité, l'adhérence, etc... Ce compromis est le résultat d'appréciations subjectives, étant donné que l'amortissement optimal n'est pas identique selon que le même véhicule est utilisé en conduite paisible ou en conduite sportive. Dans l'état actuel de la technique, le compromis est déterminé de façon empirique.

De plus, la tendance actuelle à produire des véhicules automobiles de plus en plus légers avec des suspensions à flexibilité variable, fait qu'un réglage unique d'amortissement ne répond plus aux besoins de toutes les variantes d'un même modèle du véhicule, ni à toutes les conditions de conduite et aux souhaits des conducteurs.

Un amortisseur hydraulique de construction télescopique, utilisé en particulier dans une suspension de véhicule automobile, remplit deux fonctions : il freine les mouvements de la masse suspendue, en l'occurence la caisse du véhicule, et il contrôle le rebond des roues, ces deux phénomènes entraînant les principaux effets de résonance. La présente invention concerne principalement le freinage des mouvements de la masse suspendue, c'est-à-dire de la caisse dans le cas d'un véhicule, ce freinage étant assuré par le taux d'amortissement à basse vitesse de la suspension (jusqu'à environ 0,2 m/seconde tel que mesuré verticalement par rapport à la roue du véhicule). Cette partie de la caractéristique d'amortissement est assurée principalement de manière classique dans un amortisseur hydraulique télescopique, par un ou plusieurs passages permanents associés à un système de clapet. Pour modifier l'amortissement d'un tel amortisseur hydraulique, il suffit donc de faire varier la section de ces passages permanents.

On connaît déjà des amortisseurs hydrauliques télescopiques comportant un système de réglage capable de commander à distance le taux d'amortissement. Dans ces amortisseurs de type connu, un obturateur de passage permanent du système de clapet peut être déplacé au moyen d'une liaison mécanique reliant l'intérieur de l'amortisseur à un moyen d'actionnement placé à l'extérieur de l'amortisseur. Un tel moyen d'actionnement est habituellement constitué par une molette à vis, ou par un dispositif électromagnétique comportant un solénoïde ou encore par un moteur électrique. De tels dispositifs ne sont applicables que dans certaines conditions précises. Il convient en particulier qu'un espace convenable puisse être utilisé à l'extérieur de l'amortisseur pour loger un tel solénoïde ou un tel moteur électrique. Il convient en outre qu'une liaison mécanique soit possible entre l'obturateur et le moyen d'actionnement extérieur.

La présente invention a pour objet un amortisseur hydraulique télescopique permettant d'obtenir plusieurs taux d'amortissement avec un contrôle à distance et ce en utilisant des moyens qui ne dépassent pas l'enveloppe de l'amortisseur et qui soient d'un fonctionnement particulièrement simple et sûr.

L'invention a également pour objet un tel amortisseur hydraulique télescopique à amortissement contrôlé à distance qui permet un contrôle manuel, par exemple au moyen d'un interrupteur placé sur le tableau de bord du véhicule ou un contrôle automatique par mesure de différents paramètres de la marche du véhicule tels qu'accélérations latérale et longitudinale, vitesse, freinage, etc..., les différents signaux correspondant à ces paramètres pouvant être traités de manière appropriée pour commander la variation du taux d'amortissement selon un programme prédéterminé.

L'amortisseur hydraulique télescopique à amortissement contrôlé selon l'invention est du type comportant un cylindre à l'intérieur duquel peut se déplacer un piston fixé à l'extrémité d'une tige, le piston présentant au moins un passage restreint coopérant avec un clapet élastique et un passage supplémentaire qui peut être plus ou moins fermé par un moyen d'obturation commandé à distance, pour autoriser le passage du fluide hydraulique d'un côté à l'autre du piston lors du déplacement de celui-ci à l'intérieur du cylindre. Selon l'invention, le déplacement du moyen d'oburation est commandé par l'intermédiaire d'un organe d'actionnement comprenant un élément actif réalisé en un matériau métallique à mémoire capable de changer de dimension à une température de transformation déterminée. Il est ainsi possible d'obtenir deux ou plusieurs positions de l'obturateur qui gouvernent la section du passage supplémentaire se trouvant dans le piston de l'amortisseur.

Le matériau métallique à mémoire de forme est généralement un alliage à base de titane et de nickel qui change d'état cristallin à une température de transformation donnée. En dessous de la température de transformation, le métal est facilement malléable et peut être amené à une position ou une dimension prédéterminées, par exemple par l'action d'un ressort. Si la température du métal à mémoire est augmentée au-dessus de sa température de transformation, le métal à mémoire tend à revenir à la position, la dimension ou la forme prédéterminées qu'il possédait lors de sa fabrication et pour ce faire, le métal est capable d'exercer une certaine force. Lorsque l'on réduit la température en dessous de la température de transformation, le métal redevient malléable et peut être encore amené dans sa position, dimension ou forme prédéterminées, par exemple par l'action d'un système à ressort. Si certaines précautions sont prises, cette séquence d'opérations peut être répétée un grand nombre de fois.

Selon la présente invention, l'élément actif est de préférence relié à une alimentation électrique extérieure, le passage du courant électrique dans l'élément actif provoquant son échauffement par effet Joule.

L'organe d'actionnement est en outre de préférence agencé de façon que la commande entraîne le déplacement du moyen d'obturation dans le sens de la fermeture du passage supplémentaire, provoquant ainsi un durcissement de l'amortisseur.

L'élément actif en métal à mémoire est de préférence employé sous la forme d'un fil qui change de longueur avec sa température. Un tel fil est amené à une position prédéterminée, par exemple par un ressort, à une température en dessous de sa température de transformation. Il peut retrouver la longueur mémorisée lors de sa fabrication lorsque la température s'élève au dessus de la température de transformation. L'échauffement du métal à mémoire est assuré par le passage du courant électrique à travers le fil. Le chauffage du fil avec une intensité électrique relativement importante entraîne un changement de longueur très rapide. A titre d'exemple, une intensité d'environ 20 ampères sous 12 volts permet une élongation de 3 à 5% dans un temps très court pouvant atteindre et même être inférieur à 1/10ème de seconde. La température du fil peut ensuite être maintenue constante à une valeur supérieure à la température de transformation du métal à mémoire en appliquant une énergie électrique nettement inférieure, par exemple en diminuant le voltage appliqué initialement. Le refroidissement du fil à mémoire est une opération plus longue dépendant de l'environnement et peut atteindre plusieurs secondes.

Dans le mode de réalisation préféré de l'invention, la tige de l'amortisseur est creuse et l'organe d'actionnement est logé dans la tige creuse. Les fils électriques nécessaires pour provoquer l'échauffement du fil en métal à mémoire passent également dans la tige creuse de l'amortisseur. Il en résulte une structure extrêmement compacte, l'ensemble du dispositif de commande se trouvant entièrement logé dans la tige de l'amortisseur.

L'invention sera mieux comprise à l'étude de la description détaillée de quelques modes de réalisation pris à titre d'exemples nullement limitatifs et illustrés par les dessins annexés sur lesquels :

la figure 1 est une vue en coupe schématique d'un amortisseur hydraulique télescopique à amortissement contrôlé du type monotube pressurisé comportant les moyens de variation du taux d'amortissement selon l'invention;

la figure 2 est une vue en coupe agrandie de la tige et du piston de l'amortisseur de la figure 1; et

la figure 3 est une vue en coupe analogue à la figure 2 montrant une variante de réalisation.

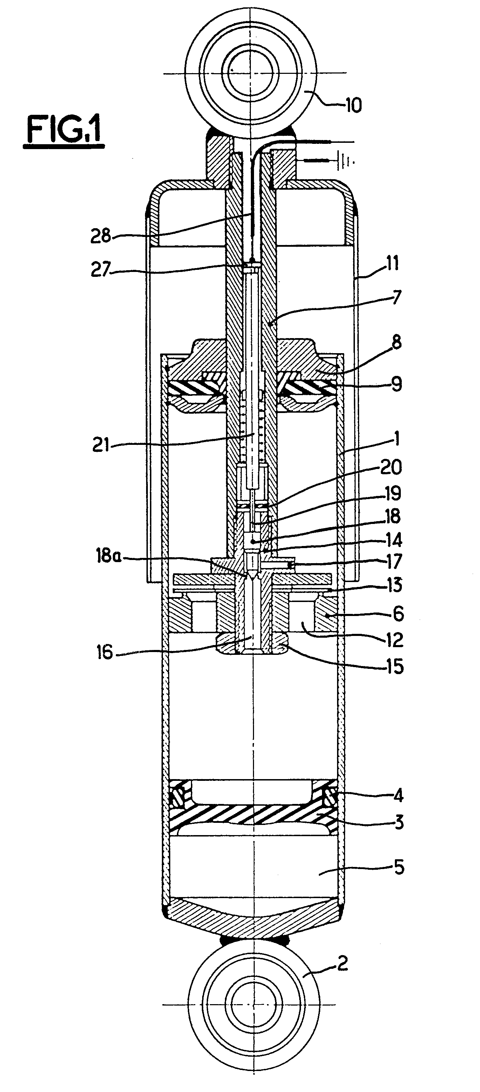

L'invention sera maintenant décrite à partir d'un exemple de réalisation d'un amortisseur monotube pressurisé illustré sur la figure 1. Ce type d'amortisseur pose un problème particulièrement difficile à résoudre dans le cas ou l'on désire monter un solénoïde ou un moteur électrique à l'extérieur afin d'obtenir un taux d'amortissement variable. Il est en effet très difficile d'assurer dans ce type d'amortisseur une liaison mécanique fiable entre le solénoïde ou le moteur électrique extérieur et le système de clapet qui se trouve dans le piston de l'amortisseur. On comprendra bien entendu que l'invention puisse également s'appliquer à d'autres types d'amortisseurs hydrauliques télescopiques, en particulier aux amortisseurs du type bitube dans lesquels seulement une partie du système de clapets d'amortissement se trouve dans le piston. Dans les amortisseurs du type bitube, un clapet de pied est en effet monté à l'extrémité du cylindre, côté borgne du piston, afin de permettre un passage restreint du fluide hydraulique depuis le cylindre jusqu'à un réservoir, éventuellement pressurisé par un gaz, disposé concentriquement autour du cylindre.

Tel qu'il est illustré sur la figure 1, l'amortisseur hydraulique télescopique monotube comprend un cylindre 1 fixé à l'une de ses extrémités par un oeillet 2. Un piston libre 3 muni d'un joint torique d'étanchéité 4 sépare le cylindre 1 en deux portions. Une portion 5 contient un gaz sous pression et l'autre portion du cylindre est remplie de fluide hydraulique. Un piston 6 est fixé à l'extrémité d'une tige 7 dont le déplacement dans le cylindre 1 est guidé par le guide 8 fixé au cylindre 1 et associé à un joint d'étanchéité 9. L'extrémité extérieure de la tige 7 est fixée à un deuxième oeillet de fixation 10. L'amortisseur est complété par un protecteur 11 solidaire de la tige 7 et venant coiffer une partie du cylindre 1.

Le piston 6 comporte des passages permanents 12 coopérant avec un système de clapets 13. La tige 7 est creuse et comporte à son extrémité interne un adaptateur 14 qui est vissé dans un taraudage central du piston 6 et coopère avec un écrou 15. L'adaptateur 14 est percé d'un passage axial 16 qui se trouve en communication avec le côté borgne du piston 6 et un ou plusieurs passages 17 disposés radialement, en communication avec le côté tige du piston 6. A l'intérieur de l'adaptateur 14 est montée une soupape 18 mobile en translation axiale qui, en position fermée, obture la communication entre les passages 16 et 17 en reposant sur son siège 18a. Dans la position ouverte de la soupape 18, les passages 16 et 17 communiquent entre eux.

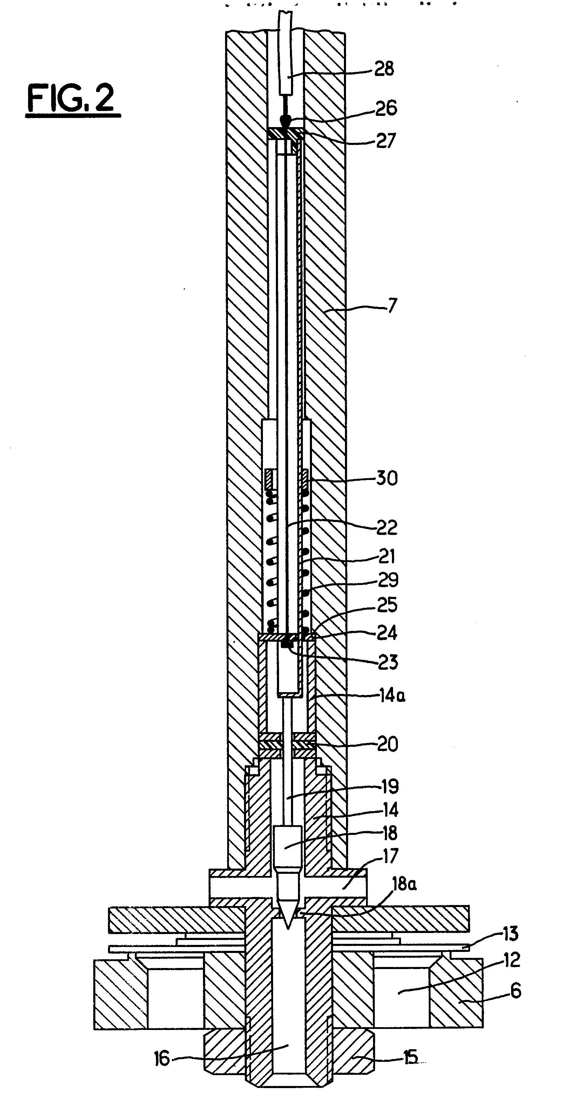

On se reportera à la figure 2 pour mieux comprendre le fonctionnement de l'ensemble. Comme on peut le voir sur la figure 2, la soupape 18 est fixée à un poussoir axial 19 qui traverse un joint d'étanchéité 20. Le poussoir 19 est attaché au corps d'un organe d'actionnement 21 qui comporte un fil en métal à mémoire 22 disposé axialement et tenu à une extrémité 23 à une plaque métallique radiale 24 emprisonnée par l'intermédiaire d'une douille d'espacement 14a entre l'adaptateur 14 et un épaulement radial 25 pratiqué dans la tige creuse 7. A son autre extrémité 26, le fil 22 est fixé contre le corps de l'organe d'actionnement 21 par un bouchon 27 en un matériau électriquement isolant. Le fil à mémoire 22 est alimenté en courant électrique par le fil souple 28 et le retour du courant électrique est assuré à l'extrémité 23 par la plaque métallique 24 en contact avec la tige 7 reliée à son tour à la masse.

Le corps de l'organe d'actionnement 21 est constitué d'une pièce allongée ayant une section en forme de U qui peut traverser un évidement en forme de U pratiqué dans la plaque métallique 24, de façon à permettre à cette dernière de tenir le fil à mémoire 22 à son extrémité 23 tout en autorisant le déplacement en translation de l'organe d'actionnement 21 selon l'axe de la tige creuse 7. Un ressort 29 monté entre une butée 30 solidaire de l'organe d'actionnement 21 et la plaque métallique 24, assure que le fil à mémoire 22 reste toujours tendu même pendant le transport avant l'assemblage de l'amortisseur. En dessous de la température de transformation du métal à mémoire dont est constitué le fil 22, la force exercée par le ressort 29 maintient la soupape 18 dans une position ouverte permettant la circulation du fluide hydraulique dans l'amortisseur d'un côté du piston 6 à l'autre côté par les passages 16 et 17. Au dessus de la température de transformation du métal à mémoire, le fil à mémoire 22 voit sa longueur diminuer et exerce donc sur la plaque métallique 24 une traction par son extrémité 23. La plaque 23 étant fixe, cette traction entraîne par réaction une poussée sur le bouchon 27 à l'extrémité 26 du fil 22. L'organe d'actionnement 21 se déplace donc en translation, entraînant le poussoir 19 et la soupape 18 qui obture la communication entre les passages 16 et 17 empêchant ainsi la circulation du fluide hydraulique dans l'amortisseur d'un côté du piston 6 à l'autre par les passages 16 et 17. Ce dispositif fournit donc deux positions de réglage d'amortissement selon que le fil à mémoire 22 est alimenté en électricité ou non.

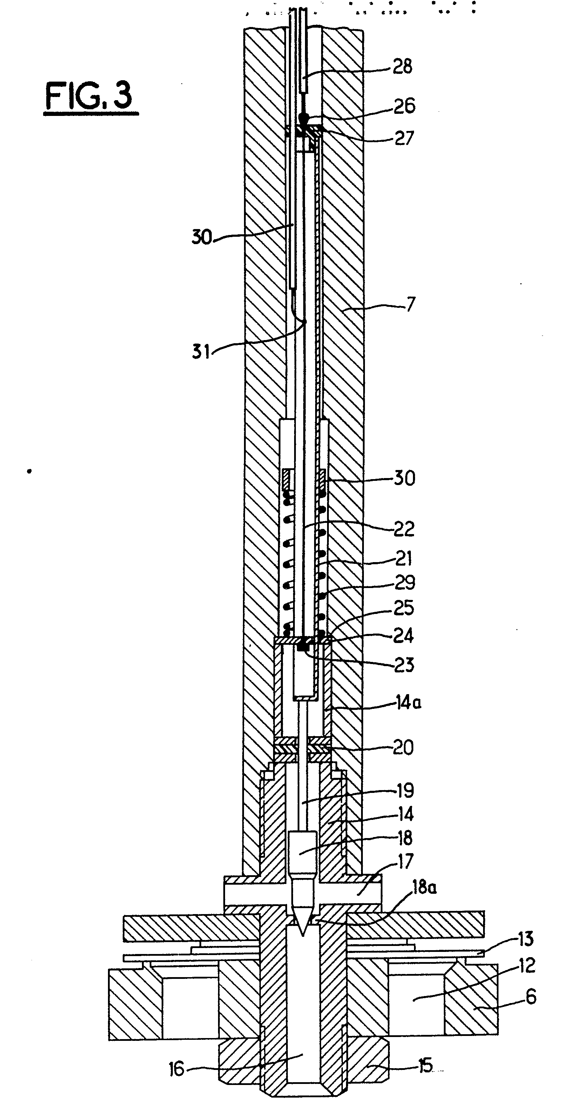

La figure 3, sur laquelle les pièces identiques portent les mêmes références, illustre une variante de réalisation. Dans cette variante, un deuxième fil souple 30 d'alimentation en courant électrique traverse le bouchon isolant 27 et est connecté au fil 22 en un point 31 de sa longueur, qui correspond dans l'exemple illustré à environ 1/3 de la longueur du fil 22. Avec une commande appropriée, il est donc possible d'obtenir avec cette variante, quatre positions de la soupape 18 correspondant à quatre différents réglages d'amortissement selon qu'aucune portion, 1/3, 2/3 ou la totalité de la longueur du fil à mémoire 22 est alimentée en courant électrique.

Le métal à mémoire utilise dans l'organe d'actionnement de la présente invention est choisi parmi les différents alliages à mémoire de type connu, principalement à base de titane et de nickel, pour ses propriétés mécaniques, physiques et électriques, pour fournir la force nécessaire pour le nombre d'opérations prévu. Le métal à mémoire choisi est en outre tel que sa température de transition permette un hystérésis acceptable entre la phase d'échauffement et la phase de refroidissement et assure un temps de fonctionnement faible avec une consommation électrique réduite.

## Revendications

1. Amortisseur hydraulique télescopique à amortissement contrôlé comportant un cylindre (1) à l'intérieur duquel peut se déplacer un piston (6) fixé à l'extrémité d'une tige (7), le piston présentant au moins un passage restreint (12) coopérant avec un clapet élastique (13), un passage supplémentaire (16,17) pouvant être plus ou moins fermé par un moyen d'obturation (18) commandé à distance, pour autoriser le passage du fluide hydraulique d'un côté à l'autre du piston lors du déplacement de celui-ci à l'intérieur du cylindre, caractérisé par le fait que le déplacement du moyen d'obturation (18) est commandé par l'intermédiaire d'un organe d'actionnement (21) comprenant un élément actif (22) réalisé en un matériau métallique à mémoire capable de changer de dimension à une température de transformation déterminée.

2. Amortisseur selon la revendication 1, caractérisé par le fait que l'élément actif est relié à une alimentaton électrique extérieure, le passage du courant électrique dans l'élément actif provoquant son échauffement par effet Joule.

3. Amortisseur selon la revendication 1 ou 2, caractérisé par le fait que l'organe d'actionnement est agencé de façon que la commande entraîne le déplacement du moyen d'obturation dans le sens de la fermeture du passage supplémentaire (16,17).

4. Amortisseur selon l'une quelconque des revendications précédentes, caractérisé par le fait que l'élément actif est un fil résistant en métal à mémoire dont la longueur est réduite lorsqu'on y applique un courant électrique d'intensité déterminée.

5. Amortisseur selon la revendication 4, caractérisé par le fait que le fil à mémoire est relié à l'alimentation électrique de façon à être parcouru par un courant électrique sur toute sa longuer.

6. Amortisseur selon la revendication 5, caractérisé par le fait que le fil à mémoire est en outre relié à une deuxième alimentation électrique (30) en un point (31) de sa longueur de façon à permettre le passage du courant électrique sur des portions déterminées du fil à mémoire (22).

7. Amortisseur selon l'une quelconque des revendications précédentes, caractérisé par le fait que la tige de l'amortisseur est creuse, l'organe d'actionnement étant logé dans la tige creuse.

8. Amortisseur selon la revendication 7, caractérisé par le fait que l'organe d'actionnement comprend une pièce allongée capable de coulisser dans la tige creuse et solidaire à l'une de ses extrémités d'un poussoir (19) agissant sur l'obturateur (18) et à son autre extrémité, de l'une des extrémités (26) d'un fil résistant (22) en métal à mémoire, l'autre extrémité du fil à mémoire étant solidaire d'une butée (24) fixe par rapport à la tige (7) du piston.

9. Amortisseur selon la revendication 8, caractérisé par le fait qu'un ressort (29) est monté entre la pièce allongée et une butée fixe (24) par rapport à la tige (7) du piston afin d'assurer le rappel élastique de l'organe d'actionnement.

10. Amortisseur selon l'une quelconque des revendications précédentes, caractérisé par le fait qu'il est du type monotube pressurisé, le cylindre renfermant un piston libre supplémentaire séparant une portion du cylindre contenant un gaz sous pression.

11. Amortisseur selon l'une quelconque des revendications 1 à 9, caractérisé par le fait qu'il est du type bitube, un clapet de pied permettant un passage restreint du fluide hydraulique entre le cylindre et un réservoir, éventuellement pressurisé par un gaz, disposé concentriquement autour du cylindre.

**FIG.1**

FIG.2

0236204

FIG. 3

0236204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 418 390  (DE CARBON) <br> * Page 3, lignes 1-35; figure 1 * | 1,7 | F 16 F    9/46 |
| A | US-A-2 899 023  (RUMSEY) <br> * Colonne 2, ligne 54  -  colonne 3, ligne 12; figure 1 * | 1,7 | |

DOMAINES TECHNIQUES
RECHERCHES (Int. Cl.4)

F 16 F
B 60 G

Le présent rapport de recherche a été établi pour toutes les revendications

| Lieu de la recherche | Date d'achèvement de la recherche | Examinateur |
|---|---|---|
| LA HAYE | 10-06-1987 | ZERI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82